# EUROPEAN PATENT APPLICATION

(11) **EP 4 819 038 A1**
(43) Date of publication of application: **07.10.2026**
(21) Application number: 26170547.9
(22) Date of filing: 02.04.2026
(51) Int. Cl.: G06T 7/00

(54) **LOW SPEED BASELINE IMAGES FOR OPTICAL INSPECTION SYSTEM**

(30) Priority: 04.04.2025 US 202519170832
(71) Applicant: RTX Corporation, Farmington, CT 06032 (US)
(72) Inventor: WARREN, Eli, Bend, 97703-8475 (US); CANNATA, John D., Marlborough, 06447 (US)
(74) Representative: Dehns

(57) **Abstract**

An optical inspection method (300) includes capturing one or more low-speed images (414) of a plurality of fans in a fan rotor, storing the one or more low-speed images (414) in a historical database (420) of an optical inspection system (400), and using the one or more low-speed images (414) in an inspection algorithm (500) of the optical inspection system (400) to produce an inspection result (440). Capturing the one or more low-speed images (414) for the plurality of fans in the fan rotor may include capturing the one or more images (404) of the plurality of fans while the fans are rotating at less than 100 rpm using a camera (402). Using the one or more low-speed images (414) in the inspection algorithm (500) may include using the one or more low-speed images (414) as reference images (404) for the inspection algorithm (500) to determine a presence of an irregularity on the plurality of fans.

## Description

### TECHNICAL FIELD

This invention relates generally to engine inspection devices and processes. More specifically, this invention relates to systems and methods for generating and implementing low speed baseline images for an optical inspection system.

### BACKGROUND

The fan blades in a fan rotor stage of a gas turbine engine can be subject to damage caused by a variety of different factors. For example, foreign or domestic objects can strike a fan blade causing Foreign Object Damage (FOD) and Domestic Object Damage (DOD), surface erosion can occur, or vibratory response can produce high cycle fatigue that can lead to damage. Such damage may be randomly located (FOD / DOD) or it may be statistically more likely located in certain regions. For example, along the leading edge of a fan blade, and more specifically at certain regions of a fan blade leading edge. Current practices for inspecting fan blades involve a manual inspection of each fan blade by a technician when the turbine engine is shut down and cooled down. Inspections of this type are time intensive, costly, and require skilled technicians. There is also an elevated risk of FOD/DOD from the inspection itself from inspectors leaving behind objects that get ingested into the engine during the next engine start. More efficient and less costly processes that can be used to inspect fan blades are desirable.

### SUMMARY

This invention provides an optical inspection system and method using low speed baseline images.

According to an aspect of the present invention, there is provided a method. The method includes capturing one or more low-speed images of a plurality of fans in a fan rotor, storing the one or more low-speed images in a historical database of an optical inspection system, and using the one or more low-speed images in an inspection algorithm of the optical inspection system to produce an inspection result.

Any single one or any combination of the following features may be used with the above embodiment.

Optionally, and in accordance with the above, capturing the one or more low-speed images for the plurality of fans in the fan rotor may include capturing the one or more images of the plurality of fans while the fans are rotating at less than 100 rpm using a camera.

Optionally, and in accordance with any of the above, capturing the one or more low-speed images for the plurality of fans in the fan rotor may include using a neural network model to determine if one or more images captured by a camera of the plurality of fans satisfies a predetermined quality condition, and upon determining that the one or more images captured by the camera satisfy the predetermined quality condition, storing the satisfactory images as the one or more low-speed images in the historical database.

Optionally, and in accordance with any of the above, the one or more low-speed images may be captured periodically.

Optionally, and in accordance with any of the above, using the one or more low-speed images in the inspection algorithm may include using the one or more low-speed images as reference images for the inspection algorithm to determine a presence of an irregularity on the plurality of fans.

Optionally, and in accordance with any of the above, using the one or more low-speed images in the inspection algorithm may include using the one or more low-speed images as part of an inspection step during a low-speed inspection of the plurality of fans.

Optionally, and in accordance with any of the above, using the one or more low-speed images in the inspection algorithm may further include using the one or more low-speed images to compare to previously stored low-speed images in the historical database to track changes in the plurality of fans over time.

According to another aspect of the present invention, there is provided an electronic device. The electronic device includes one or more cameras, and a controller having at least one processor. The processor is configured to cause the electronic device to capture one or more low-speed images of a plurality of fans in a fan rotor, store the one or more low-speed images in a historical database, and use the one or more low-speed images in an inspection algorithm to produce an inspection result.

Any single one or any combination of the following features may be used with the above embodiment.

Optionally, and in accordance with the above, the at least one processor, while causing the electronic device to capture the one or more low-speed images for the plurality of fans in the fan rotor, may be further configured to cause the electronic device to capture the one or more images of the plurality of fans while the fans are rotating at less than 100 rpm using a camera.

Optionally, and in accordance with any of the above, the at least one processor, while causing the electronic device to capture the one or more low-speed images for the plurality of fans in the fan rotor, may be further configured to cause the electronic device to use a neural network model to determine if one or more images captured by a camera of the plurality of fans satisfies a predetermined quality condition, and upon determining that the one or more images captured by the camera satisfy the predetermined quality condition, store satisfactory images as the one or more low-speed images in the historical database.

Optionally, and in accordance with any of the above, the at least one processor, while causing the electronic device to capture the one or more low-speed images for the plurality of fans in the fan rotor, may be further configured to cause the electronic device to capture the one or more low-speed images periodically.

Optionally, and in accordance with any of the above, the at least one processor, while causing the electronic device to use the one or more low-speed images in the inspection algorithm, may be further configured to cause the electronic device to use the one or more low-speed images as reference images for the inspection algorithm to determine a presence of an irregularity on the plurality of fans.

Optionally, and in accordance with any of the above, the at least one processor, while causing the electronic device to use the one or more low-speed images in the inspection algorithm, may be further configured to cause the electronic device to use the one or more low-speed images as part of an inspection step during a low-speed inspection of the plurality of fans.

Optionally, and in accordance with any of the above, the at least one processor, while causing the electronic device to use the one or more low-speed images in the inspection algorithm, may be further configured to cause the electronic device to use the one or more low-speed images to compare to previously stored low-speed images in the historical database to track changes in the plurality of fans over time.

According to another aspect of the present invention, there is provided a non-transitory computer-readable medium is provided. The non-transitory computer-readable medium includes program code, that when executed by at least one processor of an electronic device, causes the electronic device to capture one or more low-speed images of a plurality of fans in a fan rotor, store the one or more low-speed images in a historical database of an optical inspection system, and use the one or more low-speed images in an inspection algorithm of the optical inspection system to produce an inspection result.

Any single one or any combination of the following features may be used with the above embodiment.

Optionally, and in accordance with the above, the program code, that when executed by the at least one processor, causes the electronic device to capture the one or more low-speed images for the plurality of fans in the fan rotor, may further include program code, that when executed by the at least one processor, causes the electronic device to capture the one or more images of the plurality of fans while the fans are rotating at less than 100 rpm using a camera.

Optionally, and in accordance with any of the above, the program code, that when executed by the at least one processor, causes the electronic device to capture the one or more low-speed images for the plurality of fans in the fan rotor, may further include program code, that when executed by the at least one processor, causes the electronic device to use a neural network model to determine if one or more images captured by a camera of the plurality of fans satisfies a predetermined quality condition, and upon determining that the one or more images captured by the camera satisfy the predetermined quality condition, store satisfactory images as the one or more low-speed images in the historical database.

Optionally, and in accordance with any of the above, the program code, that when executed by the at least one processor, causes the electronic device to capture the one or more low-speed images for the plurality of fans in the fan rotor, may further include program code, that when executed by the at least one processor, causes the electronic device to capture the one or more low-speed images periodically.

Optionally, and in accordance with any of the above, the program code, that when executed by the at least one processor, causes the electronic device to use the one or more low-speed images in the inspection algorithm, may further include program code, that when executed by the at least one processor, causes the electronic device to use the one or more low-speed images as reference images for the inspection algorithm to determine a presence of an irregularity on the plurality of fans.

Optionally, and in accordance with any of the above, the program code, that when executed by the at least one processor, causes the electronic device to use the one or more low-speed images in the inspection algorithm, may further include program code, that when executed by the at least one processor, causes the electronic device to use the one or more low-speed images to compare to previously stored low-speed images in the historical database to track changes in the plurality of fans over time.

Other technical features may be readily apparent to one skilled in the art from the following figures, descriptions, and.

### BRIEF DESCRIPTION OF THE DRAWINGS

For a more complete understanding of this invention, reference is made to the following description, taken in conjunction with the accompanying drawings, in which:
Figure 1 illustrates an example block diagram for an example engine inspection apparatus in accordance with this invention;
Figure 2 illustrates a view of an example turbine engine in accordance with this invention;
Figure 3 illustrates an example method for generating and implementing low speed baseline images for an optical inspection system according to this invention;
Figure 4 illustrates an example schematic diagram of an optical inspection system in accordance with this invention;
Figure 5 illustrates an example flow chart of an algorithm 500 for implementing low speed baseline images in an optical inspection system according to this invention; and
Figure 6 illustrates an example device for implementing low speed baseline images for an optical inspection system in accordance with this invention.

### DETAILED DESCRIPTION

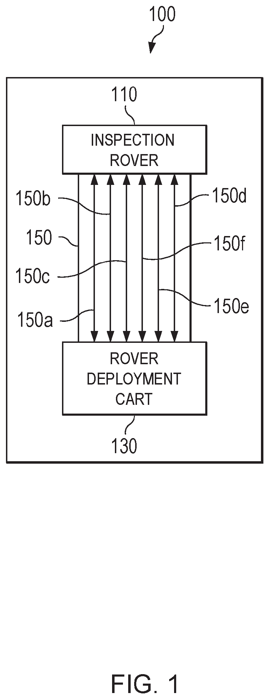

FigureS 1 through 6, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

As mentioned above, the fan blades in a fan rotor stage of a gas turbine engine can be subject to damage caused by a variety of different factors. For example, foreign or domestic objects can strike a fan blade causing Foreign Object Damage (FOD) and Domestic Object Damage (DOD), surface erosion can occur, or vibratory response can produce high cycle fatigue that can lead to damage. Such damage may be randomly located (FOD / DOD) or it may be statistically more likely located in certain regions. For example, along the leading edge of a fan blade, and more specifically at certain regions of a fan blade leading edge. Current practices for inspecting fan blades involve a manual inspection of each fan blade by a technician when the turbine engine is shut down and cooled down. Inspections of this type are time intensive, costly, and require skilled technicians. There is also an elevated risk of FOD/DOD from the inspection itself from inspectors leaving behind objects that get ingested into the engine during the next engine start.

One potential solution that can be used to inspect fan blades is an Optical Inspection System (OIS), which may be deployed while the engine is operating, and a processing system to determine if any appreciable Foreign Object Damage (FOD) is present. The determination may lead to a pass/fail decision and potentially initiate a manual inspection of the fan blades. In one embodiment, the OIS sends image data from a camera, for example, to the Full Authority Digital Engine Control (FADEC) for processing/storage and the image data can be offloaded for review for disposition on required maintenance and inspection.

The present invention provides for systems and methods for implementing low-speed images as baseline or reference images for an optical inspection system (OIS). The images captured during normal-operation at speed are correlated to higher-resolution images taken at lower speeds (or stationary) to increase the POD without improving sensor performance or decreasing acquisition speed during inspection. The lower speed acquisition (e.g., the low-speed images) may be used at much longer inspection intervals providing a reliable baseline for images collected during normal operation of an OIS. The no-speed operation may be achieved by taking static images, then hand-rotating the rotor using the gearbox to the next fan blade. The low-speed image capture (e.g., at rotational speeds of about 10 rpm to about 50 rpm) may be achieved similarly but with a low motor drive. These baseline inspections may be completed based upon a condition threshold developed from normal-operation images, such as during Condition Based Inspection, or be scheduled.

Figure 1 illustrates a block diagram for an example engine inspection apparatus 100 according to embodiments of the present invention. The embodiment of engine inspection apparatus 100 illustrated in Figure 1 is for illustration only. Different embodiments of engine inspection apparatus 100 could be used without departing from the scope of this invention.

In the example of Figure 1, engine inspection apparatus 100 includes an inspection rover 110 and a rover deployment cart 130. The rover deployment cart 130 is joined to inspection rover 110 by a stabilization tether 150. In circumstances where inspection rover 110 is deployed into an engine housing while the engine is operating, applying a force to the stabilization tether 150 helps avoid FOD to the engine by inspection rover 110 while inspection rover 110 is deployed. For example, when inspection rover 110 is deployed into an inlet, tension may be maintained on the stabilization tether 150 between inspection rover 110 and the rover deployment cart 130 to prevent the inspection rover 110 from being ingested into the engine. In another example, when the inspection rover 110 is deployed into an exhaust, a stiffening force may be maintained on the stabilization tether 150 between the inspection rover 110 and the rover deployment cart 130 to prevent inspection rover 110 from being expelled from the exhaust.

While the stabilization tether 150 is primarily used to prevent FOD and stabilize the position of inspection rover 110 within an engine housing while the engine is operating, in some embodiments, the stabilization tether 150 may provide additional support capabilities for the inspection rover 110 or the rover deployment cart 130. For example, Figure 1 illustrates that the stabilization tether 150 comprises support links 150a-150f. However, it should be understood that in some embodiments, any number of the support links 150a-150f may be omitted, and that any number of additional support links may be included in other embodiments.

The support links 150a-150f may be representative of any of a number of support functions. Examples of support functions that may be provided by one of the support links 150a-150f include, but are not limited to (i) providing electrical power to the inspection rover 110, (ii) providing control communication to the inspection rover 110, (iii) providing data communications to and from the inspection rover 110, (iv) circulating a temperature regulating medium for the inspection rover 110, or (v) supplying purge air to an engine under inspection.

For example, the support link 150a may be power supply path (e.g., positive voltage) for providing power to the inspection rover 110, and the support link 150b may be a power return path (e.g., ground) for completing the power supply circuit for the inspection rover 110. In another example, the support link 150c may be a coolant send line for providing a cooling medium to the inspection rover 110 to assist in maintaining a temperature the inspection rover 110. Similarly, the support link 150d may be a coolant return line for transporting the cooling medium away from the inspection rover 110. For instance, the cooling medium may be a liquid coolant, and the support links 150c and 150d may form a closed coolant loop between the inspection rover 110 and an external radiator and coolant pump system. In another example, the coolant medium may be chilled air, and the support links 150c and 150d may form an open loop with the inspection rover 110 where chilled air is blown into the support link 150c and exhausted through the support link150d to a point external from the engine housing. In other example, the support link 150e may provide control commands to the inspection rover 110 so that the inspection rover 110 maneuvers within the engine housing and performs various inspection operations. In yet another example, the support link 150f may provide a data path for inspection rover 110 to transmit inspection data. For example, the inspection rover 110 may use the support link 150f to transmit high-speed camera images that may be stored and processed by the rover deployment cart 130 or some other external system. Because the stabilization tether 150 may provide these support functions to the inspection rover 110, the inspection rover 110 has few limitations with regards to electrical power, purge-supply, cooling capacity, and data rate.

While Figure 1 illustrates an engine inspection apparatus 100 as including a single inspection rover 110 and a single stabilization tether 150, it should be understood that in some embodiments engine inspection apparatus 100 may include multiple inspection rovers 110 or multiple stabilization tethers 150. In some embodiments, inspection apparatus 100 may include multiple rover deployment carts 130.

Although Figure 1 illustrates one example of a block diagram for an example engine inspection apparatus 100, various changes may be made to Figure 1. For example, the inspection apparatus 100 may simply include one or more cameras (e.g., positioned in the gas path of an engine) coupled to a controller, such as a full authority digital engine control (FADEC) or an electronic engine control (EEC).

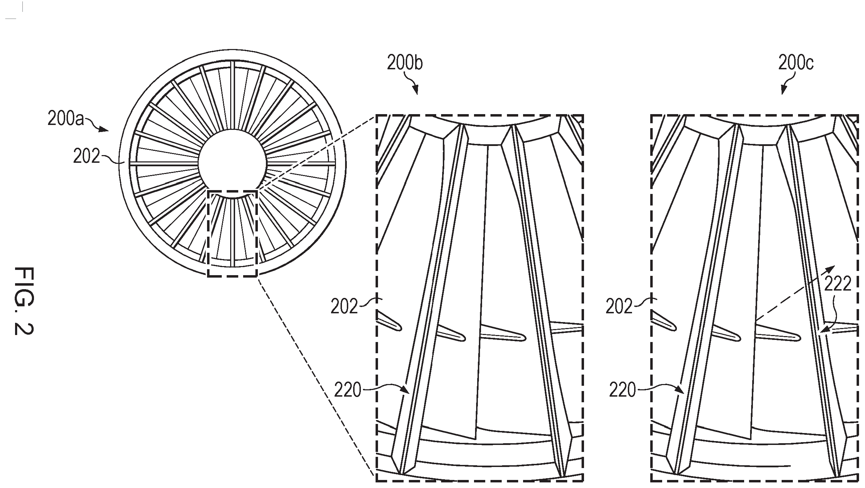

Figure 2 illustrates views 200a-200c of an example turbine engine 202 according to embodiments of the present invention. The embodiment of engine 202 illustrated in Figure 2 is for illustration only. Different embodiments of an engine 202 could be used without departing from the scope of this invention.

In the example of Figure 2, views 200a-200c depict the turbine engine 202. The view 200a is a forward looking aft view of the turbine engine 202. The views 200b and 200c are illustrative of a standard field of view of an inspection sensor while engine inspection apparatus 100 is performing an inspection of a turbine engine 202. In some embodiments, the inspection apparatus 100 may be calibrated based on a particular field of view, such as one of views 200b or 200c. The turbine engine 202 includes fan inlet variable vane (FIVV) struts 220 and 222. The turbine engine 202 may be installed in an engine housing of a different apparatus, such as an aircraft, a generator, or a ship. During an inspection, a remotely controlled inspection rover, such as the inspection rover 110 may use an accessory such as a stabilization locking mechanism to lock itself to the turbine engine 202. For example, the inspection rover 110 may use an accessory (not shown) to lock itself to one or both of the FIVV struts 220 and 222 or another component. In this manner, the inspection rover 110 may perform inspection operations while the turbine engine 202 is operating. For example, locking on to engine 202 may assist in preventing FOD to the turbine engine 202 from the inspection rover 110, help prevent ingestion of the inspection rover 110, and may stabilize the position of the inspection rover 110 while performing inspection operations.

Although Figure 2 illustrates one example of a turbine engine 202 in use, various changes may be made to Figure 2. For example, engine 202 could be a different type of engine, could include different components.

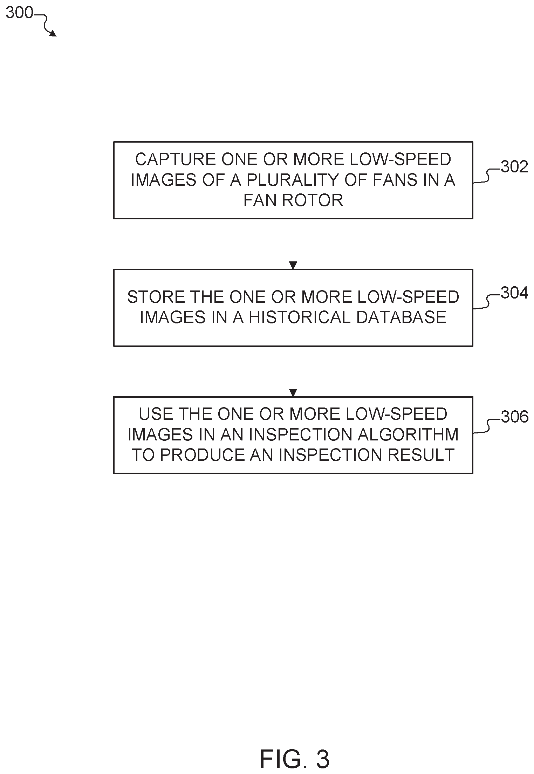

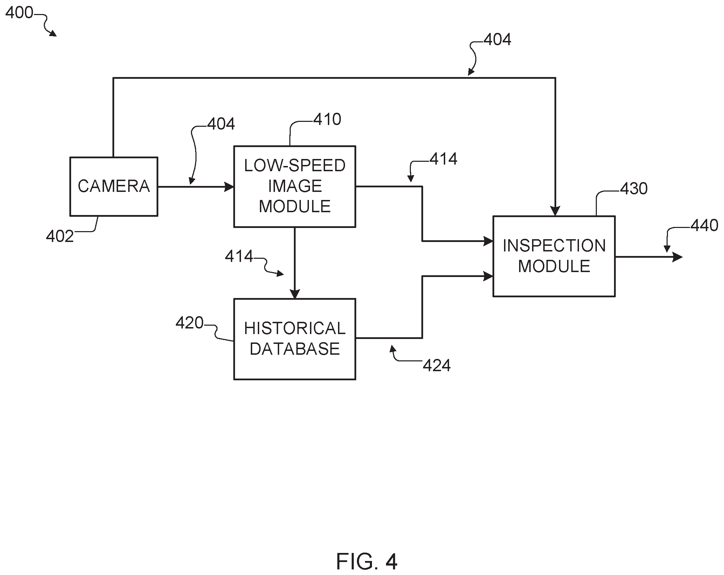

Figure 3 illustrates an example method 300 for generating and implementing low speed baseline images for an optical inspection system according to this invention. Figure 4 illustrates an example schematic diagram of an optical inspection system 400 in accordance with this invention. For ease of explanation, the method 300 of Figure 3 is described as being performed using the optical inspection system 400 of Figure 4. However, the method 300 may be used with any other suitable system and any other suitable optical inspection system.

As shown in Figure 3, one or more low-speed images 414 of a plurality of fans in a fan rotor are captured at step 302. For example, as shown in Figure 4, optical inspection system 400 may include one or more cameras 402 coupled to a low-speed image module 410. The one or more cameras 402 may capture the one or more images 404 of the plurality of fans of an engine while the fans are rotating at less than 100 rpm, such as about 10 rpm to about 50 rpm or less, such as about 0 rpm or when the fans are stationary. Alternatively, the one or more cameras 402 may capture the one or more images 404 of the plurality of fans of an engine during a start transition speed of the engine (e.g., such as when the fans are rotating at a percentage of a rated speed of the engine, such as about 15% or more, such as about 20% or more), during a cooling down monitoring sequence (e.g., during a bowed rotor mitigation process where the fans are rotated intermittently), or a combination thereof. If the one or more images 404 are captured while the plurality of fans are stationary, the one or more images 404 may include images of different portions of the plurality of the fans by rotating the fans briefly (manually or otherwise). Additionally, the low-speed image module 410 may use a neural network model to determine if one or more images 404 of the plurality of fans captured by the one or more cameras satisfies a predetermined quality condition. For example, the low-speed image module 410 may use a convolutional neural network (CNN), such as a neural image assessment (NIMA), to determine image quality of the one or more images 404. The NIMA may use a CNN structure to extract desired features (e.g., resolution, noise level), and rank the one or more images 404 based on the extracted features. The NIMA may use loss functions, such as an Earth Mover's Distance loss function, to adjust the ranking process of the one or more images 404.

The one or more low-speed images 414 are stored in a historical database 420 at step 304. For example, the low-speed image module 410 may store the one or more low-speed images 414 in the historical database 420 coupled to the low-speed image module 410. The stored one or more low-speed images 414 may be tokenized or otherwise indexed (e.g., by metadata, date taken, location on the engine, rotational speed of the plurality of fans, or quality of the images). Additionally, if a neural network model is used to determine whether the one or more images 404 satisfy a predetermined quality condition, the low-speed image module 410 will store satisfactory images as the one or more low-speed images 414 in the historical database 420. capture the one or more low-speed images 414 periodically upon determining that the one or more images 404 captured by the camera satisfy the predetermined quality condition.

The historical low-speed images 424 may be stored for a period, such as for a predetermined length of time, or may be stored until a predetermined condition is met. For example, the historical low-speed images 424 may be stored in the historical database 420 until a memory of the historical database 420 reaches a predetermined threshold (e.g., percentage of memory used) before the oldest set of historical low-speed images 424 are erased. Alternatively, the oldest historical low-speed images may be replaced after a predetermined amount of one or more low-speed images 414 are captured (e.g., at a set number of inspections).

The one or more low-speed images 414 are used in an inspection algorithm to produce an inspection result 440 at step 306. For example, during operation of an optical inspection system (e.g., while the engine is operating at speeds less than about 500 rpm), the low-speed image module 410 may provide the one or more low-speed images 414 to the inspection module 430 where the inspection module 430 may use the one or more low-speed images 414 as input into an inspection algorithm.

The inspection algorithm used by the inspection module 430 may be, for example, a neural network model configured to perform object detection in images or a video feed (e.g., from the one or more images 404) and compare the object detection results to the one or more low-speed images 414, where the one or more low-speed images 414 are used as reference images for the inspection algorithm to determine a presence of an irregularity on the plurality of fans. For example, the inspection algorithm may use a convolutional neural network (CNN), such as a region-based CNN (R-CNN). The R-CNN may use a selective search method to identify potential regions (or "region proposals") within an image that might contain objects. The selective search method generates a set of region proposals (e.g., 1000 or more), which are rectangular regions that could potentially enclose objects, by merging or splitting segments of the one or more low-speed images 414 based on various image cues like color, texture, and shape to create the set of region proposals. Each region proposal is then resized to a fixed size and passed through a pre-trained CNN to extract a fixed-length feature vector. Additionally, the R-CNN may identify regions of interest, determine bounding box dimensions (e.g., based on an Intersection over Union performance metric), and classify detected objects. Other versions of R-CNNs, such as Fast R-CNN, which use a single shared CNN, and Faster R-CNN, which integrates a Region Proposal Network, are contemplated.

In such instances, the inspection module 430 may produce an inspection result 440 based on a positive indication that a new object of a predetermined size or shape is detected on the plurality of fans. For example, the inspection algorithm may perform object detection on the one or more low-speed images 414, the historical low-speed images 424, or both to determine a baseline then compare detected objects from the one or more images 404 received from the one or more cameras 402. A positive indication in the inspection results 440 may arise when an object is detected in the one or more images 404 that is not detected in the one or more low-speed images 414, the historical low-speed images 424, or both. The inspection results 440 may be displayed to a user (e.g., using a display of an electronic device).

The inspection algorithm may further include a neural network model configured to categorize the objects detected on the plurality of fans (e.g., by predetermined categories of FOD or DOD). For example, the inspection algorithm may use a separate CNN designed for processing image data to preserve the spatial relationships between pixels in the one or more low-speed images 414 to facilitate classification. The CNN may use convolutional layers to extract features from the one or more low-speed images 414, followed by pooling layers to reduce spatial dimensions, and then fully connected layers for classification.

Alternatively, or additionally, the inspection algorithm may include a rule-based algorithm configured to compare images or a video feed to the one or more low-speed images 414. Additionally, the historical database 420 may provide historical low-speed images 424, previous versions of the one or more low-speed images 414, to the inspection module 430 for use in the inspection algorithm. For example, the inspection algorithm may use the one or more low-speed images 414 and compare to the historical low-speed images 424 to determine a long-term condition of the plurality of fans to determine a degree of wear or erosion, such as if the engine is used in sandy environments, to provide an inspection result 440. Additionally, the one or more low-speed images 414 may be used as part of an inspection step during a low-speed inspection of the plurality of fans.

Although Figure 3 illustrates one example of a method 300 for generating and implementing low speed baseline images for an optical inspection system, various changes may be made to Figure 3. For example, while shown as a series of steps, various steps in Figure 3 may overlap, occur in parallel, or occur any number of times.

Similarly, although Figure 4 illustrates an optical inspection system 400 using low-speed baseline images, various changes may be made to Figure 4. For example, other neural networks, such as recurrent neural networks or other variations of CNNs, may be used by the low-speed image module, the historical database, the inspection module, or a combination thereof. Additionally, various components in Figure 4 may be combined, further subdivided, replicated, omitted, or rearranged and additional components may be added according to particular needs.

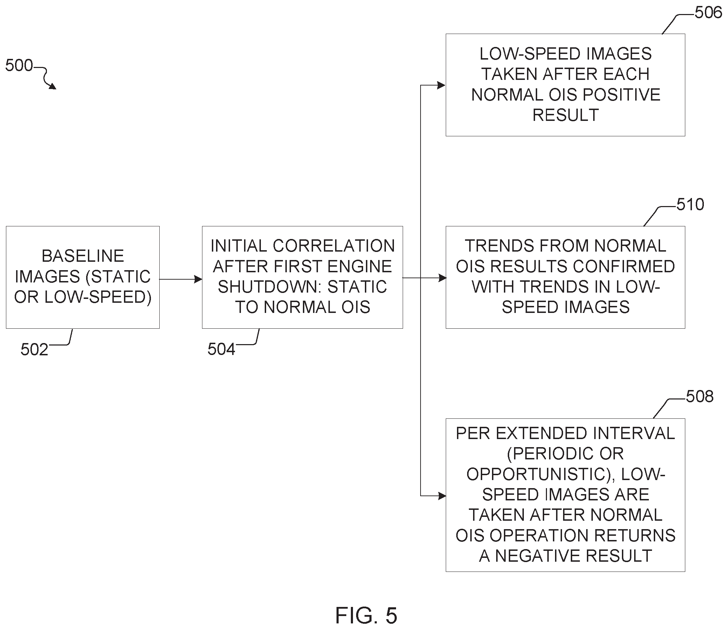

Figure 5 illustrates an example flow chart of an algorithm 500 for implementing low speed baseline images in an optical inspection system according to this invention. For ease of explanation, the algorithm 500 of Figure 5 is described as being performed using the optical inspection system 400 of Figure 4. However, the algorithm 500 may be used with any other suitable system and any other suitable optical inspection system.

As shown in Figure 5, the algorithm 500 includes capturing baseline images of an engine (e.g., of integrally bladed rotor, fans) when the engine is static or operating at low rotational speeds to produce the one or more low-speed images 414 at operation 502.

After the one or more low-speed images 414 are captured, an initial correlation between the one or more low-speed images 414 and a typical OIS process is assessed in operation 504. For example, in a normal OIS process, the one or more cameras 402 may capture one or more images 404 of the engine. In operation 504, the captured one or more images 404 are then correlated or compared to the one or more low-speed images 414, the historical low-speed images 424, or both as described in step 306 of method 300.

After the initial correlation, the optical inspection system 400 will either produce a positive result (operation 506) or a negative result (operation 508). If the optical inspection system 400 produces a positive (no-go) result, one or more low-speed images 414 are captured again after each normal OIS positive result (e.g., by performing object detection as described in step 306 of method 300) to confirm the positive result in operation 506. The redundancy of taking and analyzing another set of low-speed images reduces false positive OIS results, subsequently reducing occurrences of manual inspections (e.g., using a borescope).

For a negative (all good) result, the optical inspection system 400 will capture one or more low-speed images 414 after extended intervals (e.g., periodically or opportunistically) in operation 508. For example, the optical inspection system 400 will perform the method 300 periodically, such as after a predetermined number of flight cycles, or opportunistically, such as during an engine shut down sequence. The periodic capturing of the low-speed images 414 after a negative OIS result also reduce false negative OIS results.

Additionally, the optical inspection system 400 may compare trends from the normal OIS results indicating wear or erosion in the engine to trends indicating wear or erosion in the one or more low-speed images 414 and the historical low-speed images 424 stored in the historical database 420.

Although Figure 5 illustrates one example of a method 500 for generating and implementing low speed baseline images for an optical inspection system, various changes may be made to Figure 5. For example, while shown as a series of steps, various steps in Figure 5 may overlap, occur in parallel, or occur any number of times.

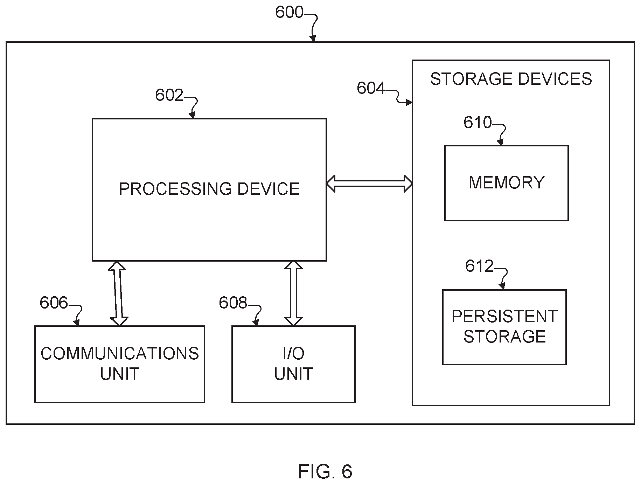

Figure 6 illustrates an example device 600 for generating and implementing low speed baseline images for an optical inspection system according to this invention. One or more instances of the device 600 (or portions thereof) may, for example, be used to, at least partially, implement the functionality of the optical inspection system 400 of Figure 4. However, the functionality of the optical inspection system 400 may be implemented in any other suitable manner.

As shown in Figure 6, the device 600 denotes a computing device or system that includes at least one processing device 602, at least one storage device 604, at least one communications unit 606, and at least one input/output (I/O) unit 608. The processing device 602 may execute instructions that can be loaded into a memory 610. The processing device 602 includes any suitable number(s) and type(s) of processors or other devices in any suitable arrangement. Example types of processing devices 602 include one or more microprocessors, microcontrollers, DSPs, ASICs, GPUs, FPGAs, or discrete circuitry.

The memory 610 and a persistent storage 612 are examples of storage devices 604, which represent any structure(s) capable of storing and facilitating retrieval of information (such as data, program code, and/or other suitable information on a temporary or permanent basis). The memory 610 may represent a random access memory or any other suitable volatile or nonvolatile storage device(s). The persistent storage 612 may contain one or more components or devices supporting longer-term storage of data, such as a read only memory, hard drive, Flash memory, or optical disc.

The communications unit 606 supports communications with other systems or devices. For example, the communications unit 606 can include a network interface card or a wireless transceiver facilitating communications over a wired or wireless network. The communications unit 606 may support communications through any suitable physical or wireless communication link(s).

The I/O unit 608 allows for input and output of data. For example, the I/O unit 608 may provide a connection for user input through a keyboard, mouse, keypad, touchscreen, or other suitable input device. The I/O unit 608 may also send output to a display or other suitable output device. Note, however, that the I/O unit 608 may be omitted if the device 600 does not require local I/O, such as when the device 600 can be accessed remotely or operated autonomously.

In some embodiments, the instructions executed by the processing device 602 can include instructions that implement all or portions of the functionality of the optical inspection system 400 described above. For example, the instructions executed by the processing device 602 can include instructions for generating and implementing low speed baseline images for an optical inspection system as described above.

Although Figure 6 illustrates one example of a device 600 for generating and implementing low speed baseline images for an optical inspection system, various changes may be made to Figure 6. For example, computing devices and systems come in a wide variety of configurations, and Figure 6 does not limit this invention to any particular computing device or system.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present invention should not be read as implying that any particular element, step, or function is an essential or critical element that must be included in the claim scope.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. A method (300) comprising:
capturing (302) one or more low-speed images (414) of a plurality of fans in a fan rotor;
storing (304) the one or more low-speed images (414) in a historical database (420) of an optical inspection system (400); and
using (306) the one or more low-speed images (414) in an inspection algorithm (500) of the optical inspection system (400) to produce an inspection result (440).

2. The method (300) of claim 1, wherein capturing the one or more low-speed images (414) for the plurality of fans in the fan rotor comprises:
capturing the one or more low-speed images (414) of the plurality of fans while the fans are rotating at less than 100 rpm using a camera (402).

3. The method (300) of claim 1 or 2, wherein capturing the one or more low-speed images (414) for the plurality of fans in the fan rotor comprises:
using a neural network model to determine if one or more images (404) of the plurality of fans captured by a camera (402) satisfies a predetermined quality condition; and
upon determining that the one or more images (404) captured by the camera (402) satisfy the predetermined quality condition, storing satisfactory images (414) as the one or more low-speed images (414) in the historical database (420).

4. The method (300) of any preceding claim, wherein the one or more low-speed images (414) are captured periodically.

5. The method (300) of any preceding claim, wherein using the one or more low-speed images (414) in the inspection algorithm (500) comprises:
using the one or more low-speed images (414) as reference images for the inspection algorithm (500) to determine a presence of an irregularity on the plurality of fans.

6. The method (300) of any preceding claim, wherein using the one or more low-speed images (414) in the inspection algorithm (500) comprises:
using the one or more low-speed images (414) as part of an inspection step during a low-speed inspection of the plurality of fans.

7. The method (300) of any preceding claim, wherein using the one or more low-speed images (414) in the inspection algorithm (500) further comprises:
using the one or more low-speed images (414) to compare to previously stored low-speed images (424) in the historical database (420) to track changes in the plurality of fans over time.

8. An electronic device comprising:
one or more cameras (402); and
a controller having at least one processor (602) configured to cause the electronic device to:
capture one or more low-speed images (414) of a plurality of fans in a fan rotor;
store the one or more low-speed images (414) in a historical database (420); and
use the one or more low-speed images (414) in an inspection algorithm (500) to produce an inspection result (440).

9. The electronic device of claim 8, wherein the at least one processor (602), while causing the electronic device to capture the one or more low-speed images (414) for the plurality of fans in the fan rotor, is further configured to cause the electronic device to:
capture the one or more images (404) of the plurality of fans while the fans are rotating at less than 100 rpm using a camera (402).

10. The electronic device of claim 8 or 9, wherein the at least one processor (602), while causing the electronic device to capture the one or more low-speed images (414) for the plurality of fans in the fan rotor, is further configured to cause the electronic device to:
use a neural network model to determine if one or more images (404) of the plurality of fans captured by a camera (402) satisfies a predetermined quality condition; and
upon determining that the one or more images (404) captured by the camera (402) satisfy the predetermined quality condition, store satisfactory images (414) as the one or more low-speed images (414) in the historical database (420).

11. The electronic device of any of claims 8 to 10, wherein the at least one processor (602), while causing the electronic device to capture the one or more low-speed images (414) for the plurality of fans in the fan rotor, is further configured to cause the electronic device to:
capture the one or more low-speed images (414) periodically.

12. The electronic device of any of claims 8 to 11, wherein the at least one processor (602), while causing the electronic device to use the one or more low-speed images (414) in the inspection algorithm (500), is further configured to cause the electronic device to:
use the one or more low-speed images (414) as reference images (404) for the inspection algorithm (500) to determine a presence of an irregularity on the plurality of fans.

13. The electronic device of any of claims 8 to 12, wherein the at least one processor (602), while causing the electronic device to use the one or more low-speed images (414) in the inspection algorithm (500), is further configured to cause the electronic device to:
use the one or more low-speed images (414) as part of an inspection step during a low-speed inspection of the plurality of fans.

14. The electronic device of any of claims 8 to 13, wherein the at least one processor (602), while causing the electronic device to use the one or more low-speed images (414) in the inspection algorithm (500), is further configured to cause the electronic device to:
use the one or more low-speed images (414) to compare to previously stored low-speed images (424) in the historical database (420) to track changes in the plurality of fans over time.

15. A non-transitory computer-readable medium (610) comprising program code, that when executed by at least one processor (602) of an electronic device, causes the electronic device to carry out the method (300) of any of claims 1 to 7.
